(19) Europäisches Patentamt
European Patent Office
Office européen des brevets

(11) EP 1 462 901 B1

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
***G05B 13/02*** *(2006.01)*     ***G05D 23/19*** *(2006.01)*

(21) Anmeldenummer: **04003776.4**

(22) Anmeldetag: **19.02.2004**

(54) **Verfahren zur Prozessregelung oder -steuerung von thermischen Lastwechseln von einem Medium durchströmten krümmungsbehinderten und/oder dickwandigen Bauteil in einem thermischen System**

Method for the control or regulation of a thermal load variation process in a fluid conveying non-deformable and/or thick wall component of a thermal system.

Procédé pour la régulation ou la commande d'un processus de variation de charge thermique dans une piece non déformable et/ou à paroi épaisse traversée par un fluide dans une installation thermique

(84) Benannte Vertragsstaaten:
**BE DE FR IE NL**

(30) Priorität: **14.03.2003 DE 10311223**

(43) Veröffentlichungstag der Anmeldung:
**29.09.2004 Patentblatt 2004/40**

(73) Patentinhaber: **ABB Research Ltd.**
**8050 Zürich (CH)**

(72) Erfinder:
• **Franke, Rüdiger, Dr.-Ing.**
**68163 Mannheim (DE)**
• **Krüger, Klaus, Dr.-Ing.**
**67122 Altrip (DE)**
• **Rode, Manfred, Dipl.-Ing.**
**69168 Wiesloch (DE)**

(74) Vertreter: **Miller, Toivo et al**
**ABB Patent GmbH**
**Postfach 1140**
**68520 Ladenburg (DE)**

(56) Entgegenhaltungen:
**WO-A-93/12476**    **DE-A1- 19 910 222**
**FR-A- 2 801 115**    **US-A- 5 625 552**
**US-A- 5 735 134**    **US-A1- 2003 009 241**
**US-B1- 6 176 306**

• **SPEITKAMP L: "BESTIMMUNG VON TEMPERATURDIFFERENZEN IN DICKEN DRUCKBEHAELTERWAENDEN AUS DER ZEITLICHEN FOLGE VON TEMPERATURMESSWERTEN AN DER ISOLIERTEN WANDAUSSENSEITE" VGB KRAFTWERKSTECHNIK, VGB KRAFTWERKSTECHNIK GMBH. ESSEN, DE, Bd. 68, Nr. 2, Februar 1988 (1988-02), Seiten 182-186, XP008047075 ISSN: 0372-5715**

EP 1 462 901 B1

**Beschreibung**

Die Erfindung betrifft ein Prozessregel- oder Steuerverfahren zur Prozessregelung oder -steuerung von thermischen Lastwechseln in einem thermischen System, wobei das thermische System ein von einem Medium durchströmtes krümmungsbehindertes und/ oder dickwandiges Bauteil aufweist. Insbesondere beim Betrieb in Kraftwerken sollen Lastwechsel möglichst wirtschaftlich, kosteneffizient, mit kurzen An- und Abfahrzeiten sowie mit einem hohen Wirkungsgrad vollzogen werden. Dabei wird die Geschwindigkeit des Übergangs von einem vorhandenen Arbeitspunkt zu einem neuen Arbeitspunkt maßgeblich durch die auftretenden Wärmespannungen in den krümmungsbehinderten und/ oder dickwandigen Bauteilen bestimmt. Die Wärmespannungen werden durch die mit dem Lastwechsel verbundenen Aufheiz- bzw. Abkühlvorgänge an den Bauteilen verursacht, wie sie beispielsweise beim An- und Abfahren einer Turbine auftreten. Für eine gezielte Beeinflussung der Lastwechsel ist daher die Kenntnis der Wärmeübergangseigenschaften zwischen dem das Bauteil durchströmenden Medium und der Wand des Bauteiles sowie deren Berücksichtigung im regelungstechnischen Prozess von maßgeblicher Bedeutung.

Bekannt sind Verfahren, bei denen davon ausgegangen wird, dass die Temperatur des durchströmenden Mediums $T_s$ zeitlich konstant verändert wird, nachfolgend auch als linear veränderbare Leittemperatur bezeichnet, und die Wandtemperaturen des Bauteils zeitlich versetzt den gleichen Änderungen unterliegen.

Wie in diesem Betriebsfall Temperaturdifferenzen abgeschätzt werden, ist in R. Pich: Näherungsgleichungen zur Abschätzung der instationären Wärmespannungen in krümmungsbehinderten Platten, Hohlzylindern und Hohlkugeln. VGB Kraftwerkstechnik 63 (1983), Nr. 10, S. 182 - 186, ausgeführt.

Entsprechend der Zunahme der Änderungsgeschwindigkeit der Temperatur des durchströmenden Mediums $T_s$ erhöht sich die Wärmespannung im Bauteil. Dabei muß die Änderungsgeschwindigkeit der Temperatur des durchströmenden Mediums $T_s$ so gewählt werden, dass die maximal erlaubte Wärmespannung nicht überschritten wird.

Von der bei diesem Verfahren ausgegangenen Voraussetzung eines konstanten Wärmeübergangskoeffizienten α zwischen dem das Bauteil durchströmende Medium und der Wand des Bauteils, ist unter realen Praxisbedingungen so nicht gültig, weil der Wärmeübergangskoeffizient α stark vom Zustand des Mediums und von den Betriebsbedingungen, beispielsweise von der Strömungsgeschwindigkeit des Mediums abhängig ist.

Wird beispielsweise Dampf als Medium verwendet, variiert der Wärmeübergangskoeffizient α, insbesondere wenn während eines Lastwechsels sowohl Sattdampf als auch überhitzter Dampf auftreten. Damit sind sowohl der Anstieg der Wandtemperatur als auch der zeitliche Versatz zwischen Innen- und Mitteltemperatur des Bauteiles bei einem variablen Wärmeübergangskoeffizienten α nicht mehr konstant. Demzufolge schränkt sich die Anwendbarkeit des Verfahrens auf nur begrenzte Arbeitsbereiche ein.

Für die Ermittlung der tatsächlich auftretenden Wärmespannungen in dickwandigen und an der Außenseite ideal isolierten Bauteilen ist die Kenntnis der Temperaturdifferenz $(T_m - T_i)$ zwischen der Wandinnenseite und der Wandmitte des Bauteiles notwendig, welche aus den Messungen der mittleren Wandtemperatur $T_m$ und der inneren Wandtemperatur $T_i$ abgeleitet wird.

Die Ermittlung der Temperaturdifferenz $(T_m - T_i)$ kann beispielsweise nach einem Verfahren von: L. Speitkamp: Bestimmung von Temperaturdifferenzen in dicken Druckbehälterwänden aus der zeitlichen Folge von Temperaturmesswerten an der isolierten Wandaußenseite. VGB Kraftwerkstechnik 68 (1988), Nr. 2, S.182 - 186, durchgeführt werden. Dazu werden die Temperaturdifferenzen aus mehreren Messungen an einem definierten Ort des Bauteiles zu unterschiedlichen Zeitpunkten bestimmt. Das Verfahren beruht auf der analytischen Lösung der eindimensionalen Wärmeleitungsgleichung. Die tatsächlichen Temperaturverläufe werden mit Polynomen angenähert, wobei die Ordnung des Polynoms typischerweise vier ist. Unter Verwendung der ermittelten Polynomkoeffizienten sind örtliche Temperaturverläufe und insbesondere die örtliche Differenz zwischen Innen- und Mitteltemperatur am Bauteil bestimmbar.

Voraussetzung für die Anwendung dieses Verfahrens sind eine ideale Isolation oder die Kenntnis des Wärmeübergangskoeffizienten α an der Außenseite des Bauteils.

Nachteilig an diesem Verfahren ist der hohe Rechenaufwand, der sich aus der großen Anzahl der Messwerte ergibt, die für die Berechnung und Verarbeitung notwendig sind. Beispielsweise sind zur Bestimmung der Koeffizienten eines Polynoms vierter Ordnung mindestens fünf Temperaturmesswerte erforderlich.

Insbesondere beim Überfahren von größeren Arbeitsbereichen wird mit den bekannten Verfahren die maximal zulässige Wärmespannung nur teilweise ausgeschöpft. Weiterhin ist keine Einbeziehung weiterer Mediumseigenschaften wie dem Massenstrom und dem Druck des das Bauteil durchströmenden Mediums in die Steuerung und Regelung der Lastwechsel gegeben.

Ausgehend von den beschriebenen bekannten Verfahren zum An- oder Abfahren von verfahrenstechnischen Komponenten technischer Prozesse, bei welchem sich die Wärmespannungen eines krümmungsbehinderten und/ oder dickwandigen Bauteiles bei seiner Durchströmung von einem Medium mit einer sich zeitlich konstant ändernden Mediumseigenschaft, insbesondere der Temperatur, ebenfalls konstant aber zeitlich versetzt ändern, liegt der Erfindung die Aufgabe zugrunde, ein Prozessregel- oder Steuerverfahren anzugeben, dass durch eine Änderung der Mediumseigenschaften, insbesondere der Temperatur, des ein Bauteil durchströmenden Mediums, eine maximale Ausnutzung der zulässigen Wärmespannungen des Bauteils für einen kosteneffizienten thermischen Lastwechsel realisiert. Ausserdem soll eine Einrichtung zur Durchführung des erfindungsgemäßen Verfahrens angegeben werden.

Diese Aufgabe wird durch ein Prozessregel- oder Steuerverfahren zur Änderung der Mediumseigenschaften, insbesondere der Temperatur, des Druckes und des Massenstromes des das Bauteil durchströmenden Mediums mit den im Anspruch 1 angegebenen Merkmalen gelöst. Eine Einrichtung zur Durchführung des Verfahrens und vorteilhafte Ausgestaltungen sind daneben im Folgenden beschrieben.

Das erfindungsgemäße Verfahren basiert darauf, dass Mediumseigenschaften des das Bauteil durchströmenden Mediums so beeinflusst werden, dass ein möglichst effizienter Lastwechsel erreicht wird. Die konkreten zeitlichen Verläufe der Mediumseigenschaften werden unter Zuhilfenahme eines Effizienzkriteriums abgeleitet.

Eine hohe Effizienz eines Lastwechsels wird in der Regel durch maximale Ausnutzung der zulässigen Wärmespannungen am vom Medium durchströmten Bauteil erreicht.

Neben der Mediumstemperatur werden dabei auch weitere Mediumseigenschaften, wie beispielsweise Massenstrom und Druck berücksichtigt. Der Massenstrom des Mediums beeinflusst maßgeblich den Wärmeübergang zwischen Medium und Wand. Unter Ausnutzung dieser Eigenschaft wird durch gezielte Variation des Massenstroms die Wärmespannung in der Wand des Bauteils beeinflusst.

Auch der Mediumsdruck beeinflusst sowohl den Wärmeübergang als auch die Wärmespannungen in der Wand des Bauteils und wird deshalb ebenfalls gezielt beeinflusst.

Zur gezielten Beeinflussung der Wärmespannungen im Bauteil mittels der Mediumseigenschaften ist die Kenntnis der Wärmeübergangseigenschaften zwischen dem Medium und der Wand des Bauteils von entscheidender Bedeutung. Falls kein funktionaler Zusammenhang zwischen den Mediumseigenschaften und dem Wärmeübergangskoeffizienten $\alpha$ zwischen dem Medium und der Wand des Bauteils bekannt ist, ist eine Bestimmung des Wärmeübergangskoeffizienten $\alpha$ aus den vorhandenen Messungen für die Mediums- und Wandtemperaturen notwendig.

Hierzu werden zunächst die vorhandenen Messungen der inneren Wandtemperatur und der mittleren Wandtemperatur des Bauteils erfasst, um die Wärmestromdichte q des Wärmestromes aus dem Medium in die Wand des Bauteils zu ermitteln.

Zur Ermittlung der Wärmestromdichte wird eine Erweiterung des aus dem Stand der Technik bekannten Verfahrens von L. Speitkamp: Bestimmung von Temperaturdifferenzen in dicken Druckbehälterwänden aus der zeitlichen Folge von Temperaturmesswerten an der isolierten Wandaussenseite. VGB Kraftwerkstechnik 68(1988), Nr. 2, S. 182-186 zur analytischen Lösung der eindimensionalen Wärmeleitungsgleichung, dahingehend angewendet, dass die Wärmeleitungsgleichung nicht nur zur Bestimmung von nicht gemessenen Temperaturen, sondern auch zur Bestimmung der nicht messbaren Wärmestromdichte aus dem Medium in die Wand verwendet wird.

Für die in der Praxis bedeutsame zylindrische Bauform der Wand des Bauteils mit isolierter Wandaußenseite ist die folgende analytische Lösung des sich bei stationären Wärmeflussbedingungen ausprägenden Temperaturprofils T(r) aus H. Carslaw und J. Jaeger: Conduction of Heat in Solids, 2. Auflage, Oxford University Press, 1959 **mit:**

$$T_m - T(r) = -\frac{qr_i}{\lambda}\left[\left(\frac{r_o^2}{r_o^2 - r^2}\right)^2 ln\frac{r_o}{r} - \frac{3r_o^2 - r^2}{4(r_o^2 - r^2)}\right], r_i \leq r \leq r_o$$

bekannt.

Die Einflussgrößen auf das Temperaturprofil T(r) sind die Wärmeleitfähigkeit $\lambda$, der Radius r, der Innenradius $r_i$ und der Außenradius $r_o$ der zylindrischen Wand des Bauteils.

Die Beziehung (1) zur Ermittlung der stationären Wärmeflussbedingungen erlaubt die Bestimmung von nicht gemessenen Wandtemperaturen und Wärmestromdichten q bereits ab zwei zur Verfügung stehenden Temperaturmesswerten für die Wand des Bauteils.

Eine Verringerung des Rechenaufwandes gegenüber dem aus dem Stand der Technik bekannten Verfahren setzt stationäre Wärmeflussbedingungen voraus, welche darin bestehen, dass die Wärmestromdichte q des Wärmestromes aus dem Medium in die Wand zeitlich konstant ist und die Wandtemperaturen einer linearen Veränderung in Abhängigkeit von der Zeit unterliegen. Die Beziehung (1) ist somit insbesondere für das praktisch bedeutende Regime anwendbar, bei dem während eines Lastwechsels eine zulässige Temperaturdifferenz ($T_m$- $T_i$) über eine lange Zeit konstant gehalten werden soll.

Unter Verwendung der Beziehung für stationäre Wärmeflussbedingungen (1) wird nun die Wärmestromdichte q aus dem Medium in die Wand des Bauteils mit folgender Methode

$$q = - \frac{\lambda(T_m - T_i)}{r_i\left[\left(\dfrac{r_o^2}{r_o^2 - r_i^2}\right)^2 \ln \dfrac{r_o}{r_i} - \dfrac{3r_o^2 - r_i^2}{4\left(r_o^2 - r_i^2\right)}\right]} \qquad (2)$$

ermittelt.

Die mit der hier vorgestellten neuen Methode (2) oder mit einer anderen Methode entsprechend dem Stand der Technik ermittelte Wärmestromdichte $q$ des Wärmestromes aus dem Medium in die Wand wird jetzt verwendet, um den Wärmeübergangskoeffizienten $\alpha$ zwischen dem Medium und der Wand eines

Bauteils zu bestimmen. Für eine bekannte Mediumstemperatur $T_s$ ergibt sich der momentane Wärmeübergangskoeffizient $\alpha$ nach der Beziehung

$$\alpha = \frac{q}{T_s - T_i} \qquad (3)$$

Bei der Ermittlung der Wärmestromdichte $q$ und des daraus resultierenden Wärmeübergangskoeffizienten $\alpha$ wird davon ausgegangen, dass die tatsächliche Wandinnentemperatur $T_i$ bekannt ist.

Unter realen Praxisbedingungen existiert in der Regel jedoch eine Restdicke zwischen der Temperaturmessstelle am Bauteil und der Temperatur an der Wandinnenseite des Bauteils. Ist in diesem Falle die Innenrestdicke nicht vernachlässigbar, ist die Berechnung aufbauend auf dem generell analytisch bekannten Temperaturverlauf in der Wand des Bauteils entsprechend erweiterbar.

Der mit der Beziehung (3) ermittelte Wärmeübergangskoeffizient $\alpha$ wird in vorteilhafter Weise dazu verwendet, um die Mediumseigenschaften entsprechend des Effizienzkriteriums gezielt zu beeinflussen und gleichzeitig zulässige Wärmespannungen einzuhalten, womit beispielsweise die maximal zulässige Mediumstemperatur $T_s$ bestimmbar ist, mit der eine erlaubte Temperaturdifferenz ($T_m$- $T_i$) ausgeschöpft wird.

Da der Wärmeübergangskoeffizient $\alpha$ bei sich ändernden Mediumseigenschaften variiert, wird sein Momentanwert an den Verlauf des Lastwechsels adaptiert, um einen effizienten Lastwechsel, insbesondere in Bezug auf die Kosten, die Verkürzung der benötigten Zeit und den Energieverbrauch bei einem Lastwechsel zu erreichen.

Weiterhin gelöst wird die gestellte Aufgabe durch eine Einrichtung zur Durchführung des Verfahrens, wobei einer klassischen Regelung eines unterlagerten Regelkreises ein Optimierer/ Sollwertgeber vorgeschaltet ist, der Optimierer/ Sollwertgeber aus vorgegebenen Effizienzkriterien, einer aus dem realen Prozess rückgeführten Ausgangsgröße und den Prozessgrößen, die das thermische System dem Prozess zuführt, optimierte Sollwertverläufe für den unterlagerten Regelkreis ermittelt.

Auch ist vorsehbar, dass der Optimierer/ Sollwertgeber aus den optimierten Sollwertverläufen Vorsteuerungen für den unterlagerten Regelkreis ableitet.

Weiterhin ist vorsehbar, dass der Optimierer/ Sollwertgeber zur Steuerung der thermischen Lastwechsel LW im thermischen System Stellwerte ausgibt und die Stellwerte dem Prozess direkt zuführt.

Eine weitere Beschreibung der Erfindung erfolgt anhand von Ausführungsbeispielen, die in den folgenden Zeichnungsfiguren dargestellt sind. Dabei werden vorteilhafte Ausgestaltungen und Verbesserungen der Erfindung näher erläutert und beschrieben.

Es zeigen:

**Fig. 1** einen Querschnitt durch ein krümmungsbehindertes und/ oder dickwandiges Bauteil,

**Fig. 2** einen fiktiven Verlauf der Wandtemperaturen während eines beispielhaften traditionellen Anfahrprozesses bei linear veränderter Leittemperatur,

**Fig. 3** einen tatsächlichen Verlauf der Wandtemperaturen bei linear veränderter Leittemperatur und variierendem Wärmeübergangskoeffizienten,

**Fig. 4** einen typischen Verlauf des Wärmeübergangskoeffizienten zwischen einem Medium und der Wand eines Bauteils während eines beispielhaften Anfahrprozesses,

**Fig. 5** einen Verlauf der Mediumtemperatur, die unter Ausnutzung des Verlaufs des Wärmeübergangskoeffizienten einen konstanten Anstieg der inneren Wandtemperatur und der mittleren Wandtemperatur realisiert, und

**Fig. 6** eine Darstellung einer auf dem erfindungsgemäßen Verfahren beruhenden Regeleinrichtung.

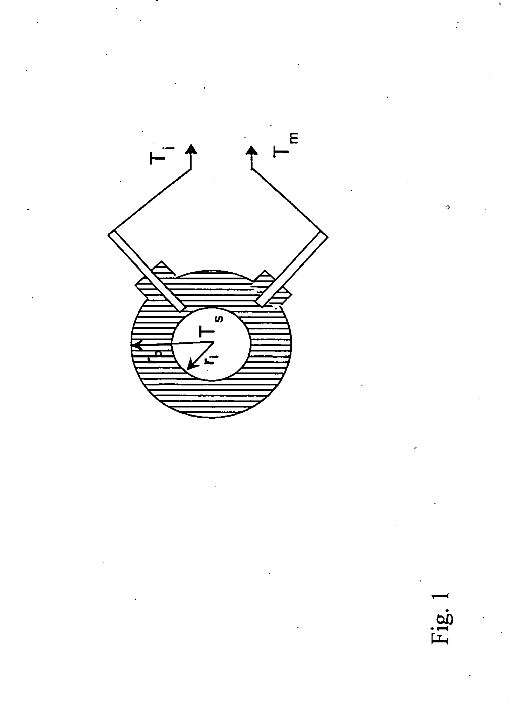

Wärmespannungen in dickwandigen und/ oder krümmungsbehinderten Bauteilen lassen sich rechnerisch aus der Temperaturdifferenz zwischen der Wandinnenseite und der Wandmitte der Bauteile bestimmen. **Fig.** 1 zeigt einen Querschnitt durch ein krümmungsbehindertes und/ oder dickwandiges Bauteil. Das Bauteil wird in der Mitte von einem Medium, beispielsweise von Dampf mit einer Temperatur $T_s$, durchströmt und während eines Lastwechsels, also beispielsweise bei sich ändernder Temperatur $T_s$, des das Bauteil durchströmende Medium von der Mitte her aufgeheizt oder abgekühlt.

Hierdurch tritt eine Temperaturdifferenz ($T_m$ - $T_i$) zwischen mittlerer Wandtemperatur $T_m$ und innerer Wandtemperatur $T_i$ auf, welche für die Ermittlung der Wärmestromdichte $q$ des Wärmestromes aus dem Medium in die Wand benötigt wird.

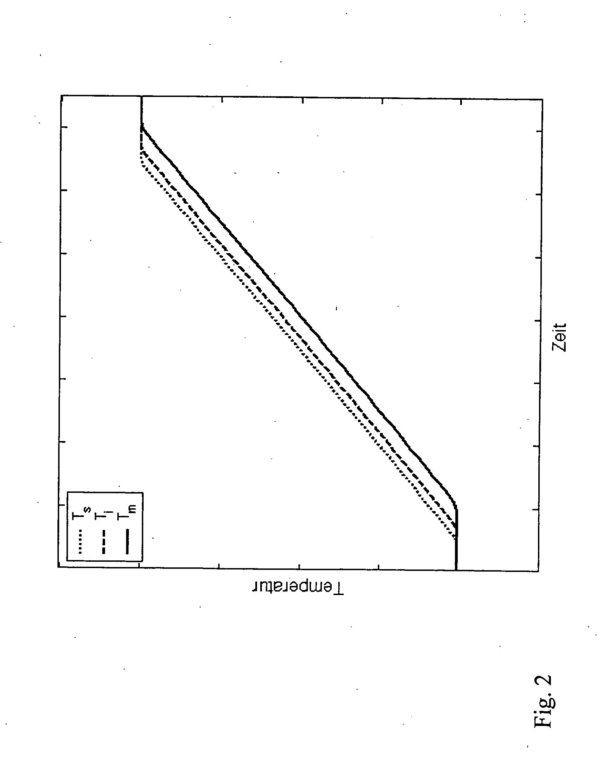

**Fig. 2** zeigt einen fiktiven Verlauf von sich linear ändernden Wandtemperaturen $T_m$ und $T_i$, während eines beispielhaften traditionellen Anfahrprozesses in einem

Kraftwerk in Abhängigkeit von der Zeit bei einer sich linear verändernden Leittemperatur $T_s$, wobei eine Berücksichtigung eines realen sich ändernden Wärmeübergangskoeffizienten ($\alpha$) nicht stattfindet.

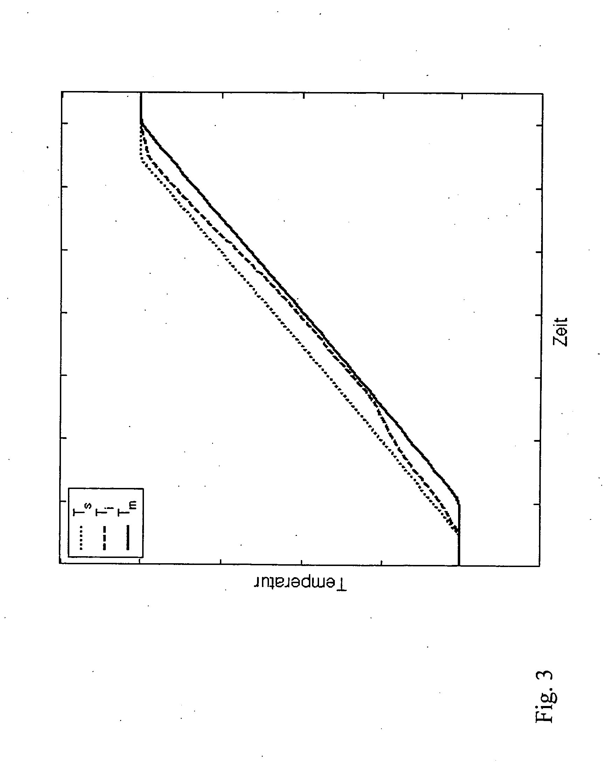

Der tatsächliche Verlauf der sich ändernden Wandtemperaturen $T_m$ und $T_i$ ist in **Fig.** 3 aufgezeigt. Unter dem Einfluss des variierenden Wärmeübergangskoeffizienten $\alpha$ ist jetzt eine nichtlineare Änderung der inneren Wandtemperatur $T_i$ bei sich linear ändernder mittlerer Wandtemperatur $T_m$ erkennbar.

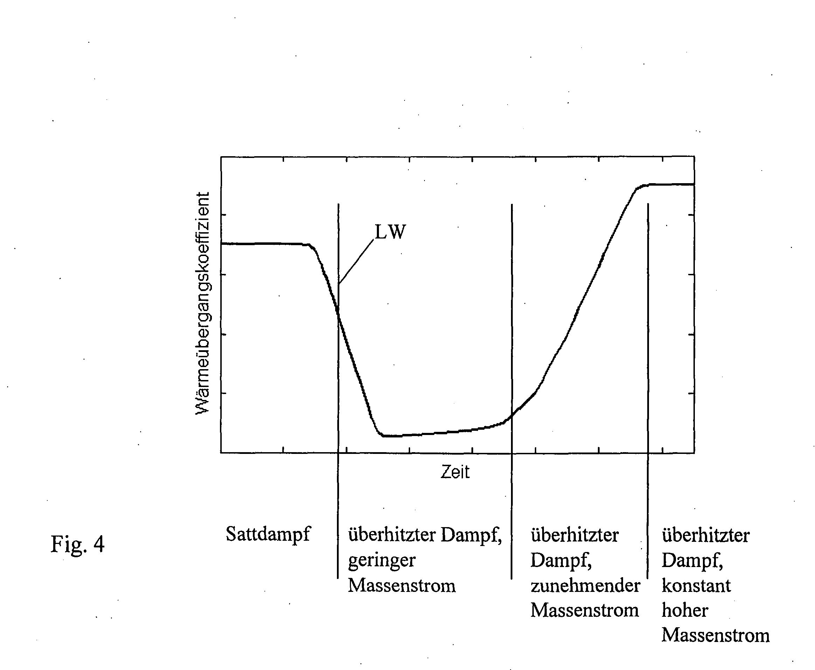

Den typischen nichtlinearen Verlauf für einen variierenden Wärmeübergangskoeffizienten $\alpha$ zwischen dem Medium Dampf und der Wand des Bauteils während eines Anfahrprozesses über eine definierte Zeit zeigt **Fig. 4.**

Die Abhängigkeit des Wärmeübergangskoeffizienten $\alpha$ von den Betriebsbedingungen bei einem Lastwechsel LW und vom Zustand des Dampfes, welcher das Bauteil durchströmt, ist am Beispiel des sich ändernden Massenstromes aufgezeigt. Der zu berücksichtigende Einfluss des Wärmeübergangskoeffizienten $\alpha$, insbesondere wenn während eines Lastwechsels LW sowohl Sattdampf als auch überhitzter Dampf auftreten, ist erkennbar.

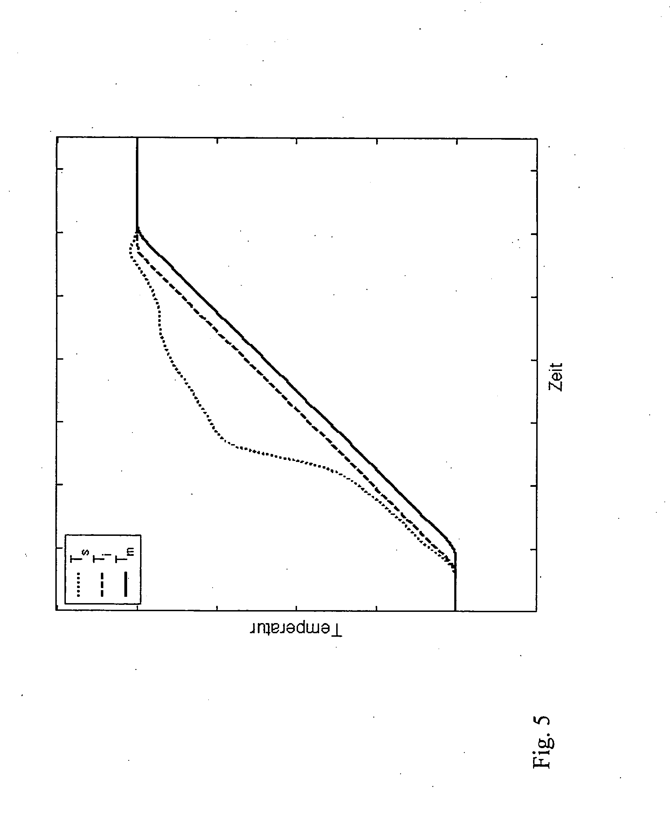

Die Berücksichtigung des Einflusses eines realen Wärmeübergangskoeffizienten $\alpha$ auf die Temperatur $T_s$ des das Bauteil durchströmende Mediums, führt zu einem in der **Fig.** 5 dargestellten Verlauf der Mediumstemperatur $T_s$.

Es ist zu erkennen, dass ein konstanter Anstieg der inneren Wandtemperatur $T_i$ und der mittleren Wandtemperatur $T_m$ während des Lastwechsels LW über eine Veränderung der Temperatur des durchströmenden Mediums $T_s$ erreichbar ist.

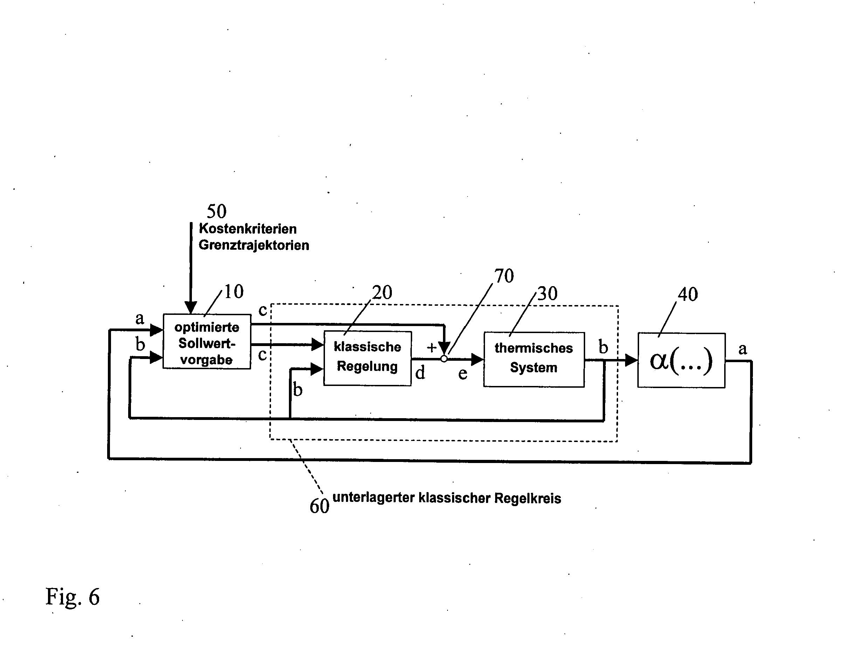

**Fig.** 6 zeigt eine Darstellung einer auf dem erfindungsgemäßen Verfahren beruhenden Einrichtung zur Regelung eines technischen Prozesses 40 und zur gezielten Beeinflussung der Mediumseigenschaften des das Bauteil durchströmenden Mediums für einen effizienten Lastwechsel als Ergebnis des im erfindungsgemäßem Verfahren beschriebenen speziellen Wärmeübergangsmodells für das thermische System 30.

Hierbei werden insbesondere die im realem Prozess 40 tatsächlich vorhandenen Wärmeübergänge, die sich aus dem Wärmestrom aus dem Medium in die Wand des Bauteils ergeben, berücksichtigt.

Die tatsächlich vorhandenen Wärmeübergänge zwischen Medium und Bauteil werden als Ausgangsgröße a aus dem realen Prozess 40 einem Optimierer/ Sollwertgeber 10 übergeben.

Über eine dem thermischen System 30 vorgeschaltete klassischen Regelung 20, welche mit dem thermischen System 30 einen unterlagerten klassischen Regelkreis bildet, ermittelt der Optimierer/ Sollwertgeber 10 aus vorgegebenen Effizienzkriterien 50, den Prozessausgangsgrößen b, die das thermische System 30 dem realen Prozess 40 zuführt, und der aus dem realen Prozess 40 rückgeführten Ausgangsgrößen a optimierte Sollwertverläufe c.

Die Effizienzkriterien 50 werden beispielsweise mittels Kostenkriterien und Grenztrajektorien 50, die ebenfalls dem Optimierer/ Sollwertgeber 10 zugeführt werden, optimiert. Gleichzeitig werden sowohl Prozessbeschränkungen als auch Wärmespannungen im thermischen System 30 eingehalten. Die optimierten Sollwertverläufe c werden dem unterlagerten klassischen Regelkreis 60 übergeben.

Die klassische Regelung 20 des unterlagerten Regelkreises 60 ermittelt aus den optimierten Sollwertverläufen c des Optimierers/ Sollwertgebers 10 und den rückgeführten Prozessausgangsgrößen b des thermischen Systems 30 einen Sollwert d, welcher an einer Additionsstelle 70 mit der optimierten Sollwertvorgabe c addiert wird und dem thermischem System 30 als Stellgröße e übergeben wird.

Aus den optimierten Sollwertverläufen c des Optimierer/ Sollwertgeber 10 sind auch Vorsteuerungen für die unterlagerten Regelkreise 60 ableitbar.

In einer weiteren Ausführungsform der erfindungsgemäßen Einrichtung zur Steuerung der thermischen Lastwechsel LW am Bauteil liefert der Optimierer/ Sollwertgeber 10 anstelle der optimierten Sollwertverläufe c Stellwerte, die direkt dem Prozess 40 übergeben werden.

Bezugszeichenliste

$T_s$      Temperatur des durchströmenden Mediums
$T_m$     mittlere Wandtemperatur
$T_i$      innere Wandtemperatur

$r_i$    Innenradius des Bauteils
$r_o$    Außenradius des Bauteils
$q$    Wärmestromdichte
$\alpha$    Wärmeübergangskoeffizient
$\lambda$    Wärmeleitfähigkeit

10    Optimierer/ Sollwertgeber
20    klassische Regelung
30    thermisches System
40    technischer Prozess
50    Kostenkriterien, Grenztrajektorien
60    unterlagerter Regelkreis
70    Additionsstelle

a    Ausgangsgröße aus dem Prozess, Größe für die tatsächlichen Wärmeübergänge zwischen Medium und Bauteil
b    Prozessausgangsgröße des thermischen Systems 3
c    Ausgangsgröße aus Optimierer/ Sollwertgeber 1, optimierte Sollwertverläufe
d    Ausgangsgröße der klassischen Reglung 2
e    gebildete Stellgröße aus c und d für das thermische System 3

LW    Lastwechsel

**Patentansprüche**

1. Prozessregel- oder -Steuerverfahren für ein thermisches System (30), das ein von einem Medium durchströmtes krümmungsbehindertes und/oder dickwandiges Bauteil enthält, wobei

   • eine innere Wandtemperatur ($T_i$) und eine mittlere Wandtemperatur ($T_m$) des Bauteils erfasst werden, wobei die innere Wandtemperatur ($T_i$) an der Wandinnenseite des Bauteils und die mittlere Wandtemperatur ($T_m$) in der Wandmitte des Bauteils erfasst werden,
   • aus der Temperaturdifferenz zwischen mittlerer Wandtemperatur ($T_m$) und innerer Wandtemperatur ($T_i$) die Wärmestromdichte (q) des Wärmestromes aus dem Medium in die Wand des Bauteils ermittelt wird,
   • unter Verwendung der inneren Wandtemperatur ($T_i$), der mittleren Wandtemperatur ($T_m$) und der Wärmestromdichte (q) der jeweilige Wärmeübergangskoeffizient ($\alpha$) ermittelt wird, und
   • der ermittelte Wärmeübergangskoeffizient ($\alpha$) dazu verwendet wird, die Mediumseigenschaften - unter Berücksichtigung der Wärmespannungen im Bauteil - zu beeinflussen.

2. Verfahren nach Anspruch 1, **dadurch gekennzeichnet, dass** die Wärmestromdichte (q) aus dem Medium in die Wand des Bauteils ermittelt wird mit:

$$q = -\frac{2\pi\lambda(T_m - T_i)}{\left(\dfrac{r_o^2}{r_o^2 - r_i^2}\right)^2 ln\dfrac{r_o}{r_i} - \dfrac{3r_o^2 - r_i^2}{4(r_o^2 - r_i^2)}}$$

wobei ($T_m$ - $T_i$) die Temperaturdifferenz zwischen der mittleren Wandtemperatur ($T_m$) und der inneren Wandtemperatur ($T_i$) des Bausteils, $\lambda$ die Wärmeleitfähigkeit, $r_i$ der Innenradius und $r_o$ der Außenradius der Wand des Bauteils sind.

3. Verfahren nach einem der vorherigen Ansprüche, **dadurch gekennzeichnet, dass** der Wärmeübergangskoeffizient ($\alpha$) ermittelt wird mit:

$$\alpha = \frac{q}{T_s - T_i}$$

wobei $T_s$ die Temperatur des Wärmestromes aus dem Medium in die Wand ist.

**4.** Verfahren nach einem der vorherigen Ansprüche, **dadurch gekennzeichnet, dass** der sich mit den verändernden Mediumseigenschaften ändernde Wärmeübergangskoeffizient ($\alpha$) an den Verlauf des Lastwechsels (LW) eines Kraftwerkes adaptiert wird.

**5.** Verfahren nach einem der vorherigen Ansprüche, **dadurch gekennzeichnet, dass** die Mediumseigenschaften die Temperatur, der Massenstrom und der Druck aus dem Medium in die Wand des Bauteils sind.

**6.** Verfahren nach einem der vorherigen Ansprüche, **dadurch gekennzeichnet, dass** bei Berücksichtigung einer Temperaturdifferenz, die sich aus der gemessenen inneren Wandtemperatur ($T_i$) und der realen Temperatur an der Wandinnenseite des Bauteiles ergibt, ein analytisch bekannter Temperaturverlauf in der Wand des Bauteils in die Bestimmung des Wärmeübergangskoeffizienten ($\alpha$) integriert wird.

**Claims**

**1.** A closed-loop or open-loop process control method for a thermal system (30), which contains a non-bending and/or thick-walled component through which a medium flows, wherein

• an inner wall temperature ($T_i$) and a middle wall temperature ($T_m$) of the component are sensed, the inner wall temperature ($T_i$) being sensed on the inner side of the wall of the component and the middle wall temperature ($T_m$) being sensed in the middle of the wall of the component,
• the heat flux density (q) of the heat flux from the medium into the wall of the component is determined from the difference in temperature between the middle wall temperature ($T_m$) and the inner wall temperature ($T_i$),
• the respective heat transfer coefficient ($\alpha$) is determined using the inner wall temperature ($T_i$), the middle wall temperature ($T_m$) and the heat flux density (q), and
• the determined heat transfer coefficient ($\alpha$) is used to influence the properties of the medium - while taking into account the thermal stresses in the component.

**2.** Method according to Claim 1, **characterized in that** the heat flux density (q) from the medium into the wall of the component is determined with:

$$q = -\frac{2\pi\lambda(T_m - T_i)}{\left(\dfrac{r_o^2}{r_o^2 - r_i^2}\right)^2 ln\dfrac{r_o}{r_i} - \dfrac{3r_o^2 - r_i^2}{4(r_o^2 - r_i^2)}}$$

where ($T_m$-$T_i$) is the difference in temperature between the middle wall temperature ($T_m$) and the inner wall temperature ($T_i$) of the component, $\lambda$ is the thermal conductivity, $r_i$ is the inner radius and $r_o$ is the outer radius of the wall of the component.

**3.** Method according to one of the preceding claims, **characterized in that** the heat transfer coefficient ($\alpha$) is determined with:

$$\alpha = \frac{q}{T_s - T_i}$$

where $T_s$ is the temperature of the heat flux from the medium into the wall.

**4.** Method according to one of the preceding claims, **characterized in that** the heat transfer coefficient ($\alpha$), changing with the changing properties of the medium, is adapted to the variation in the change in load (LW) of a power plant.

**5.** Method according to one of the preceding claims, **characterized in that** the properties of the medium are the temperature, the mass flow and the pressure from the medium into the wall of the component.

**6.** Method according to one of the preceding claims, **characterized in that**, while taking into account a difference in temperature that is obtained from the measured inner wall temperature ($T_i$) and the actual temperature on the inner side of the wall of the component, an analytically known temperature variation in the wall of the component is integrated into the determination of the heat transfer coefficient ($\alpha$).

**Revendications**

**1.** Procédé de régulation ou de commande de processus pour un système thermique (30), lequel contient un composant ne pouvant pas être courbe et/ou à paroi épaisse traversé par un fluide,

* une température de paroi intérieure ($T_i$) et une température de paroi moyenne ($T_m$) du composant étant captées, la température de paroi intérieure ($T_i$) étant captée sur le côté intérieur de la paroi du composant et la température de paroi moyenne ($T_m$) au centre de la paroi du composant,
* la densité de flux thermique (q) du flux thermique issu du fluide dans la paroi du composant étant déterminée à partir de la différence de température entre la température de paroi moyenne ($T_m$) et la température de paroi intérieure ($T_i$),
* le coefficient de transfert thermique ($\alpha$) correspondant étant déterminé en utilisant la température de paroi intérieure ($T_i$), la température de paroi moyenne ($T_m$) et la densité de flux thermique (q), et
* le coefficient de transfert thermique ($\alpha$) déterminé étant utilisé pour influencer les propriétés du fluide en tenant compte des contraintes thermiques dans le composant.

**2.** Procédé selon la revendication 1, **caractérisé en ce que** la densité de flux thermique (q) issu du fluide dans la paroi du composant est déterminée avec :

$$q = -\frac{2\pi\lambda(T_m - T_i)}{\left(\dfrac{r_o^2}{r_o^2 - r_i^2}\right)^2 \ln\dfrac{r_o}{r_i} - \dfrac{3r_o^2 - r_i^2}{4(r_o^2 - r_i^2)}}$$

où ($T_m$ - $T_i$) désigne la différence de température entre la température de paroi moyenne ($T_m$) et la température de paroi intérieure ($T_i$) du composant, $\lambda$ la conductivité thermique, $r_i$ le rayon intérieur et $r_o$ le rayon extérieur de la paroi du composant.

**3.** Procédé selon l'une des revendications précédentes, **caractérisé en ce que** le coefficient de transfert thermique ($\alpha$) est déterminé avec :

$$\alpha = \frac{q}{T_s - T_i}$$

où $T_s$ désigne la température du flux thermique issu du fluide dans la paroi.

**4.** Procédé selon l'une des revendications précédentes, **caractérisé en ce que** le coefficient de transfert thermique ($\alpha$) qui varie en fonction de la variation des propriétés du fluide est adapté au tracé du changement de charge (LW) d'une centrale électrique.

**5.** Procédé selon l'une des revendications précédentes, **caractérisé en ce que** les propriétés du fluide sont la température, le débit massique et la pression du fluide dans la paroi du composant.

**6.** Procédé selon l'une des revendications précédentes, **caractérisé en ce qu'**un tracé de la température connu du point de vue analytique dans la paroi du composant est intégré dans la détermination du coefficient de transfert thermique ($\alpha$) lors de la prise en compte d'une différence de température qui résulte de la température de paroi intérieure ($T_i$) mesurée et de la température réelle sur le côté intérieur de la paroi du composant.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Näherungsgleichungen zur Abschätzung der instationären Wärmespannungen in krümmungsbehinderten Platten. **R. PICH.** Hohlzylindern und Hohlkugeln. VGB Kraftwerkstechnik, 1983, vol. 63, 182-186
- **L. SPEITKAMP.** Bestimmung von Temperaturdifferenzen in dicken Druckbehälterwänden aus der zeitlichen Folge von Temperaturmesswerten an der isolierten Wandaußenseite. VGB Kraftwerkstechnik, 1988, vol. 68, 182-186
- **L. SPEITKAMP.** Bestimmung von Temperaturdifferenzen in dicken Druckbehälterwänden aus der zeitlichen Folge von Temperaturmesswerten an der isolierten Wandaussenseite. VGB Kraftwerkstechnik, 1988, vol. 68, 182-186
- **H. CARSLAW ; J. JAEGER.** Conduction of Heat in Solids. Oxford University Press, 1959